# EUROPÄISCHE PATENTANMELDUNG

(11) **EP 4 563 612 A1**
(43) Veröffentlichungstag der Anmeldung: **04.06.2025**
(21) Anmeldenummer: 23212853.8
(22) Anmeldetag: 29.11.2023
(51) Int. Cl.: C08G 18/18, C08G 18/40, C08G 18/48, C08G 18/63, C08G 18/76, C08G 18/80

(54) **POLYURETHANSCHAUMSTOFF MIT VERMINDERTER EMISSION**

(71) Anmelder: Covestro Deutschland AG, 51373 Leverkusen (DE)
(72) Erfinder: SCHORNSTEIN, Marcel, 41462 Neuss (DE); SCHULZ, Angelika, 51373 Leverkusen (DE); FIETZ, Harald, 51377 Leverkusen (DE); FAHLENKAMP, Sascha, 51061 Köln (DE); MURLOWSKI, Gregor, 51109 Köln (DE)
(74) Vertreter: Levpat

(57) **Zusammenfassung**

Die vorliegende Erfindung betrifft eine Polyolzusammensetzung, ein Verfahren zur Herstellung eines Polyurethanschaumstoffs unter Verwendung der Polyolzusammensetzung, den Polyurethanschaumstoff und eine Verwendung der Polyolzusammensetzung zur Herstellung des Polyurethanschaumstoffs.

## Beschreibung

Die vorliegende Erfindung betrifft eine Polyolzusammensetzung, einen aus dieser erhältlichen Polyurethanschaumstoff mit geringer Aldehydemission und/oder geringem Geruch, ein Verfahren zur Herstellung des Polyurethanschaumstoffs mit Hilfe der Polyolzusammensetzung sowie deren Verwendung zur Herstellung eines Polyurethanschaumstoffs mit geringer Aldehydemission und/oder geringem Geruch.

Polyurethanschaumstoffe an sich sind seit vielen Jahren als vielseitige Werkstoffe bekannt. Ebenso ist ihr Einsatz im Automobilbau bzw. ihre Verwendung im Automobilinnenraum Stand der Technik.

Problematisch ist hierbei die unerwünschte Emission von Aldehydverbindungen, beispielsweise Formaldehyd oder Acetaldehyd, sowie die unerwünschte Emission von Verbindungen, die vom Menschen als schlecht riechend wahrgenommen werden. Zur Reduzierung der Emission von Aldehydverbindungen und/oder Reduzierung des Geruchs von Polyurethanschaumstoffen wurden verschiedene Lösungsansätze präsentiert.

EP 2762510 A1 offenbart den Einsatz von Polyharnstoff und/oder Polyhydrazocarbonamidpartikeln in einer Polyolkomponente zur Herstellung von emissionsarmen Polyurethanschaumstoffen. Hier werden insbesondere größere Mengen an Polyharnstoffdispersion in einer Polyolkomponente eingesetzt, die außerdem Polyole der Funktionalität drei oder höher enthält.

US 2013/0203880 A1 offenbart den Einsatz von Polyhydrazodicarbonamiddispersionspolyolen in relativ geringen Mengen zur Verminderung von Aldehydemissionen.

Dem Stand der Technik ist gemein, dass Polyole mittlerer Funktionalität, d.h. im Bereich von 3,0 bis 4,0 in Kombination mit Polyharnstoffdispersions(PHD)-Polyolen eingesetzt werden.

Aufgabe der vorliegenden Erfindung war es, eine Polyolzusammensetzung bereitzustellen, deren Umsetzung mit einer Isocyanatzusammensetzung in einem Verfahren zur Herstellung eines Polyurethanschaumstoffs einen Polyurethanschaumstoff ergibt, der die geschilderten Probleme des Standes der Technik zumindest teilweise überwindet, insbesondere einen Polyurethanschaumstoff mit reduzierten Aldehydemissionen und/oder reduziertem Geruch.

Insbesondere bedeutet reduzierte Aldehydemission im Sinne dieser Erfindung, dass die Emission von Formaldehyd und/oder Acetaldehyd reduziert ist. Bevorzugt bedeutet reduzierte Aldehydemission im Sinne dieser Erfindung, dass die Emission von Formaldehyd, bestimmt gemäß VDA275: 1994-07, <0,75 mg/kg Schaumstoff, bevorzugt <0,70 mg/kg Schaumstoff, besonders bevorzugt <0,65 mg/kg Schaumstoff beträgt, oder, dass die Emission von Acetaldehyd, bestimmt gemäß VDA275: 1994-07, <0,15 mg/kg Schaumstoff, bevorzugt <0,10 mg/kg Schaumstoff beträgt. Insbesondere bevorzugt bedeutet reduzierte Aldehydemission im Sinne dieser Erfindung, dass die Emissionswertepaare von Formaldehyd und Acetaldehyd, jeweils bestimmt gemäß VDA275: 1994-07, unter den genannten Grenzwerten liegen, also jeweils für Formaldehyd/Acetaldehyd in mg/kg Schaumstoff: <0,75/<0,15, <0,75/<0,10, <0,70/<0,15, <0,70/<0,10, <0,65/<0,15, <0,65/<0,1. Weiterhin bedeutet reduzierter Geruch im Sinne dieser Anmeldung insbesondere, dass der Polyurethanschaumstoff eine Note für den Geruch, bestimmt gemäß VDA270; C3, von ≤3,5, bevorzugt ≤3,0 aufweist.

Gelöst wurde die Aufgabe überraschenderweise durch eine Polyolzusammensetzung A umfassend
A1. ein Polyetherpolyol mit einer Funktionalität f ≤ 2,8,
A2. ein Polyetherpolyol mit einer Funktionalität f ≥ 4,0, und
A3. ein gefülltes Polyol.

Es wird also eine Polyolzusammensetzung A, das heißt eine Mischung aus wenigstens drei Polyolen A1, A2 und A3, bereitgestellt, bei denen es sich um ein Polyetherpolyol mit einer Funktionalität von höchstens 2,8 (Polyetherpolyol A1), ein Polyetherpolyol mit einer Funktionalität von wenigstens 4,0 (Polyetherpolyol A2) und ein gefülltes Polyol (Polyol A3) handelt.

Polyetherpolyole sind aus dem Stand der Technik grundsätzlich bekannt. Sie sind zum Beispiel erhältlich durch Polyaddition von Alkylenoxiden an polyfunktionelle Startersubstanzen in Gegenwart von Katalysatoren. Die erfindungsgemäß eingesetzten Poly(oxyalkylen)polyole werden aus einer Starterverbindung oder einem Starterverbindungsgemisch mit durchschnittlich ≤ 2,8 aktiven Wasserstoffatomen, zum Beispiel Hydroxylgruppen, im Fall von A1 bzw. ≥ 4,0 aktiven Wasserstoffatomen, zum Beispiel Hydroxylgruppen, im Fall von A2 und jeweils einem oder mehreren Alkylenoxiden hergestellt.

Bevorzugte Starterverbindungen für A1 sind Moleküle mit 2 bis 8 Hydroxylgruppen pro Molekül, wobei Starterverbindungen mit 2 Hydroxylgruppen besonders bevorzugt sind. Beispiele für solche difunktionellen Starterverbindungen für A1 sind Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiolen (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexanen (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole), oder Mischungen von zwei oder mehr der vorgenannten Verbindungen, am meisten bevorzugt wird 1,2-Propylenglykol verwendet. Insbesondere bevorzugt besteht die Starterverbindung aus einer oder mehreren dieser difunktionellen Verbindungen, zum Beispiel 1,2-Propylenglykol.

Die erfindungsgemäß eingesetzten Polyetherpolyole A1 und A2 werden aus einem oder mehreren Alkylenoxiden hergestellt. Bevorzugt verwendete Alkylenoxide sind Ethylenoxid, Propylenoxid und Butylenoxid. Diese können allein oder im Gemisch verwendet werden. Bei Verwendung im Gemisch ist es möglich, die Alkylenoxide statistisch oder blockweise oder beides abwechselnd umzusetzen.

Bevorzugt weist das Polyetherpolyol A1 eine OH-Zahl von ≤56 mg KOH/g oder ein zahlengemitteltes Molekulargewicht von ≥2000 g/mol auf. Insbesondere bevorzugt weist das Polyetherpolyol A1 eine OH-Zahl von ≤56 mg KOH/g und ein zahlengemitteltes Molekulargewicht von ≥2000 g/mol auf.

Weiterhin bevorzugt weist das Polyetherpolyol A1 eine OH-Zahl von ≤40 mg KOH/g, zum Beispiel 10 - 40 mg KOH/g oder 20 - 40 mg KOH/g, oder ein zahlengemitteltes Molekulargewicht von 2000 - 6000 g/mol, zum Beispiel 2500 - 5500 g/mol oder 3000 - 5000 g/mol auf. Insbesondere bevorzugt weist das Polyetherpolyol A1 eine OH-Zahl von ≤40 mg KOH/g und ein zahlengemitteltes Molekulargewicht von 2000 - 6000 g/mol auf, zum Beispiel 10 - 40 mg KOH/g und 2500 - 5500 g/mol, 10 - 40 mg KOH/g und 3000 - 5000g/mol, 20 - 40 mg KOH/g und 2500 - 5500 g/mol oder 20 - 40 mg KOH/g und 3000 - 5000g/mol.

Die OH-Zahl (auch: "Hydroxylzahl") gibt im Falle eines einzelnen Polyols die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen.

Außerdem bevorzugt beträgt die Funktionalität des Polyetherpolyols A1 f ≤ 2,6, mehr bevorzugt f ≤ 2,5, f ≤ 2,4, noch mehr bevorzugt f ≤ 2,3, am meisten bevorzugt f ≤ 2,2.

Die "Funktionalität" oder "f" im Sinne dieser Anmeldung ist die theoretische Funktionalität, bezogen auf die Anzahl aktiver Wasserstoffe in den Startersubstanzen, aus denen Polyole wie Polyether- oder Polyesterpolyole hergestellt werden. Für jedes individuelle Polyol ist also die theoretische Funktionalität eine ganze Zahl. Mischungen solcher Polyole, beispielsweise aus einer Mischung aus di- oder trifunktionellen Startersubstanzen erzeugte Polyole, können eine theoretische Funktionalität aufweisen, die zwischen den Funktionalitäten der Startersubstanzen liegt. Beispielsweise weist eine Mischung aus Polyolen, hergestellt aus einer äquimolaren Mischung aus Ethylenglykol und Glycerin, eine theoretische Funktionalität von 2,5 auf.

Im Rahmen der vorliegenden Erfindung wird das zahlengemittelte Molekulargewicht Mw rechnerisch aus der wie beschrieben experimentell bestimmten OH-Zahl über die Formel Mw = 56106·f/OH-Zahl ermittelt, wobei man bei Einsetzen des Zahlenwertes der OH-Zahl in mg KOH/g das zahlengemittelte Molekulargewicht in g/mol erhält.

In einer Ausführungsform weist das Polyetherpolyol A1 einen Anteil an primären OH-Funktionen, bezogen auf die Gesamtzahl an endständigen OH-Funktionen in A1, von 70 - 90%, bevorzugt von 72 - 88%, mehr bevorzugt von 75 - 85%, auf.

In einer bevorzugten Ausführungsform beträgt der Anteil des Polyetherpolyols A1, bezogen auf die Gesamtmenge der Polyolzusammensetzung A, 60 - 90 Gew.-%, mehr bevorzugt 65 - 85 Gew.-%.

Bei dem erfindungsgemäßen Polyol A2 handelt es sich ebenfalls um ein Polyetherpolyol, für das die grundsätzlichen Ausführungen wie für A1 zur Herstellung etc. gelten.

Bevorzugte Starterverbindungen für A2 sind Moleküle mit 2 bis 8, insbesondere 3 bis 8 Hydroxylgruppen pro Molekül wie Triethanolamin, Glycerin, Trimethylolpropan, Pentaerythrit, Sorbit, Saccharose oder Mischungen aus zwei oder mehr der vorgenannten Verbindungen, besonders bevorzugt sind Moleküle mit 4 bis 8 Hydroxylgruppen pro Molekül, insbesondere bevorzugt sind Pentaerythrit, Sorbit, Saccharose oder Mischungen aus zwei oder drei der genannten Verbindungen, am meisten bevorzugt ist Sorbit. Die Startersubstanzen können allein oder im Gemisch mit niedrigerfunktionellen, unter anderem mit difunktionellen Startersubstanzen wie Diethylenglykol, Dipropylenglykol, Triethylenglykol, Tripropylenglykol, 1,4-Butandiol, 1,6-Hexandiol verwendet werden.

In einer bevorzugten Ausführungsform weist das Polyetherpolyol A2 eine OH-Zahl von ≤100 mg KOH/g, bevorzugt ≤80 mg KOH/g, mehr bevorzugt ≤60 mg KOH/g, am meisten bevorzugt 15 - 40 mg KOH/g aufweist. Es kann auch ein zahlengemitteltes Molekulargewicht von 6000 - 15000 g/mol, bevorzugt von 8000 - 14000 g/mol aufweisen. Insbesondere kann das Polyetherpolyol A2 ein zahlengemitteltes Molekulargewicht von 6000 - 15000 g/mol und eine OH-Zahl von ≤100 mg KOH/g, bevorzugt ≤80 mg KOH/g, mehr bevorzugt ≤60 mg KOH/g, am meisten bevorzugt 15 - 40 mg KOH/g aufweisen; oder es weist ein zahlengemitteltes Molekulargewicht von 8000 - 14000 g/mol und eine OH-Zahl von ≤100 mg KOH/g, bevorzugt ≤80 mg KOH/g, mehr bevorzugt ≤60 mg KOH/g, am meisten bevorzugt 15 - 40 mg KOH/g auf.

In einer weiter bevorzugten Ausführungsform weist das Polyetherpolyol A2 einen Anteil an primären OH-Funktionen, bezogen auf die Gesamtzahl an endständigen OH-Funktionen in A2, von 75 - 95%, bevorzugt von 80 - 90%, auf.

In einer bevorzugten Ausführungsform beträgt der Anteil des Polyetherpolyols A2, bezogen auf die Gesamtmenge der Polyolzusammensetzung A, 5,0 - 40,0 Gew.-%, bevorzugt 10,0 - 30,0 Gew.-%, mehr bevorzugt 12,0 - 28,0 Gew.-%, besonders bevorzugt 15,0 - 25,0 Gew.-%.

Bei dem Polyol A3 handelt es sich um ein gefülltes Polyol. Solche gefüllten Polyole sind grundsätzlich aus dem Stand der Technik bekannt. Es handelt sich in der Regel um Polyetherpolyole, die mit anderen organischen Polymeren "gefüllt" werden, um viskose, weiße bis cremefarbene Flüssigkeiten zu erzeugen. Im Allgemeinen werden gefüllte Polyole durch In-situ-Polymerisation entweder durch radikalische oder schrittweise Addition von einem oder mehreren Monomeren in einem Basispolyol hergestellt. Zu den gängigen gefüllten Polyolen gehören Styrol-Acrylnitril-Polymerpolyole (d. h. SAN-Polymerpolyole), Polyharnstoffdispersionspolyole (d. h. PHD-Polyole) und Polyisocyanat-Polyadditionspolyole (d. h. PIPA-Polyole).

Ein PHD-Polyol enthält eine Dispersion eines Polyharnstoffs in einem Basispolyol, die in situ durch Polymerisation eines Diamins oder Hydrazins und eines Isocyanats gebildet wird, während ein PIPA-Polyol (Polyisocyanat-Polyaddition) eine Polymerdispersion enthält, die durch Reaktion eines Alkanolamins mit einem Isocyanat gebildet wird. Theoretisch kann jedes im Stand der Technik bekannte Basispolyol für die Herstellung von Polymerpolyol-Dispersionen geeignet sein, jedoch werden in der vorliegenden Erfindung Polyetherpolyole als Basispolyol bevorzugt, insbesondere Polyetherpolyole, zu deren Herstellung Ethylenoxid und/oder Propylenoxid verwendet werden, die mit einem wenigstens bifunktionellen Alkohol, zum Beispiel Ethylenglykol, Diethylenglykol, Propylenglykol, Dipropylenglykol, 1,3-Propandiol, 1,4-Butandiol, Neopentylglykol, 1,5-Pentantandiol, Dibutylenglykol, Glycerin oder Trimethylolpropan, umgesetzt werden. Insbesondere bevorzugt werden Basispolyole, die aus der Umsetzung von Ethylenoxid und/oder Propylenoxid mit Glycerin erhältlich sind, am meisten bevorzugt solche, die aus der Umsetzung von Ethylenoxid und Propylenoxid mit Glycerin erhältlich sind.

Zur Herstellung von PHD-Polyolen geeignete Amine umfassen Polyamine, Hydrazin, Hydrazid, Ammoniak und Mischungen von Harnstoff und Formaldehyd.

Geeignete Polyamine umfassen, sind aber nicht beschränkt auf, primäre und/oder sekundäre aliphatische Amine, alicyclische Amine und aromatische Amine, z.B. Ethylendiamin, 1,2-Propandiamin und 1,3-Propandiamin, Tetramethylendiamin, Hexamethylendiamin, Dodecamethylendiamin, Trimethyldiaminohexan, N,N'-Dimethylethylendiamin, 2,2'-BisAminopropylmethylamin, höhervalente Diaminderivate wie Diethylentriamin, Triethylentetramin, Tetraethylpentaamin, Dipropyltriamin, Piperazin, N,N'-Bis-aminoethylpiperazin, Triazin, 4-Aminobenzolamin, 4-Aminophenylethylamin, 1-Amino-3,3,5-Trimethyl-5-aminomethylcyclohexan, 4,4'-Diaminodicyclohexylmethan, 4,4'-Diaminodicyclohexylpropan, 1 ,4-Diaminocyclohexan, Phenylendiamin, Naphthalindiamin, Kondensationsprodukte von Anilin und Formaldehyd, Toluoldiamin, Diaminomethylbenzol und monoalkylierte Derivate der aromatischen Diamine. Das Polyamin hat im Allgemeinen ein Molekulargewicht von 60 - 10000 g/mol, bevorzugt 60 - 1000 g/mol, am meisten bevorzugt 60 - 200 g/mol.

Geeignete Hydrazine umfassen Hydrazin selbst, monosubstituiertes oder N,N'-disubstituiertes Hydrazin. Der Substituent kann eine C1-C6-Alkylgruppe, eine Cyclohexylgruppe oder eine Phenylgruppe sein. Das Molekulargewicht der Hydrazine beträgt üblicherweise 32 - 200 g/mol. Geeignete Hydrazide umfassen Hydrazide zweiwertiger oder höherwertiger Carbonsäuren, zu denen beispielsweise Kohlensäure, Oxalsäure, Malonsäure, Bernsteinsäure, Adipinsäure, Sebacinsäure, Maleinsäure, Fumarsäure, Phthalsäure, Isophthalsäure und Terephthalsäure gehören; Hydrazinmonocarbonsäure und zweiwertiger Alkohol oder Ester von Polyolen und Phenolen wie Ethylenglykol, 1,2-Propylenglykol, 1,2-Butylenglykol, 1,3-Butylenglykol, 1,4-Butylenglykol, Hexandiol, Diethylenglykol, Triethylenglykol, Tetraethylenglykol, Dipropylenglykol, Tripropylenglykol und Hydrochinon; Amide (Semicarbazide) der Hydrazincarbonsäure, wie Diamine und Polyamine wie oben beschrieben. Die Hydrazide haben typischerweise ein Molekulargewicht von 90 - 10000 g/mol, bevorzugt 90 - 1000 g/mol, besonders bevorzugt 90 - 500 g/mol.

Es können auch Isocyanate, Amine, Hydrazine oder Hydrazide mit einer Funktionalität von mehr als 2 verwendet werden, insbesondere wenn sie in Kombination mit entsprechenden monofunktionellen Verbindungen verwendet werden.

In einer Ausführungsform kann das PHD-Polyol einen Propylenoxid- und/oder Ethylenoxid-Cap aufweisen. Der Ethylenoxidgehalt kann dabei 10 - 25%, bevorzugt 13 - 22%, bezogen auf die Gesamtmenge and Alkylenoxid im PHD-Polyol, betragen.

Bevorzugt handelt es sich bei dem gefüllten Polyol A3 um ein Polyol, insbesondere ein Polyharnstoffdispersionspolyol, mit einem zahlengemittelten Molekulargewicht von 4000 - 8000 g/mol, bevorzugt 5000 - 7000 g/mol, und/oder einer OH-Zahl von 10 - 50 mg KOH/g, bevorzugt 15 - 40 mg KOH/g, mehr bevorzugt 20 - 35 mg KOH/g.

Bevorzugt handelt es sich bei dem gefüllten Polyol A3 um ein Polyol, insbesondere ein Polyharnstoffdispersionspolyol, mit einer Funktionalität von 2,0 - 4,0, mehr bevorzugt von 2,2 bis 3,8, noch mehr bevorzugt von 2,5 bis 3,5.

Weiterhin bevorzugt beträgt der Anteil des gefüllten Polyols A3, insbesondere eines Polyharnstoffdispersionspolyols, bezogen auf die Gesamtmenge der Polyolzusammensetzung A, wenigstens 1,0 Gew.-%, bevorzugt 1,0 - 30,0 Gew.-%, mehr bevorzugt 1,0 - 20,0 Gew.-%, noch mehr bevorzugt 1,0 - 10,0 Gew.-%, weiterhin mehr bevorzugt 1,0 - 5,0 Gew.-%, am meisten bevorzugt 1,5 - 3,0 Gew.-%.

Besonders bevorzugt umfasst die Polyolzusammensetzung A höchstens 24,0 Gew.-%, bevorzugt höchstens 16,0 Gew.-%, besonders bevorzugt höchstens 8,0 Gew.-%, mehr bevorzugt höchstens 4,0 Gew.-%, am meisten bevorzugt höchstens 2,4 Gew.-%, bezogen auf die Gesamtmenge der Polyolzusammensetzung A, an Polyetherpolyolen mit einer Funktionalität von 2,9 bis 3,9.

In einer bevorzugten Ausführungsform umfasst die Polyolzusammensetzung höchstens 8,0 Gew.-%, höchstens 5,0 Gew.-%, höchstens 3,0 Gew.-% oder höchstens 2,0 Gew.-%, jeweils bezogen auf die Gesamtmenge der Polyolzusammensetzung, eines auf Pflanzenöl basierenden Polyols. Im Sinne dieser Anmeldung handelt es sich bei einem auf Pflanzenöl basierenden Polyol um ein Polyol handelt, zu dessen Herstellung eine ungesättigte Fettsäure und Glycerin oder ein Lipid, das durch Extraktion aus Früchten, Samen oder Embryonen von Pflanzen gewonnen werden kann, verwendet werden.

Die Erfindung ist weiterhin gerichtet auf ein Verfahren zur Herstellung eines Polyurethanschaumstoffs umfassend
Umsetzung
   A. der erfindungsgemäßen Polyolzusammensetzung und
   B. einer Isocyanatzusammensetzung umfassend
      B1. ein Di- oder Polyisocyanat
      in Gegenwart von
   C. einem Treibmittel,
   D. einem Katalysator,
   E. gegebenenfalls weiteren gegenüber Isocyanaten reaktiven Komponenten
   F. gegebenenfalls Hilfs- und Zusatzstoffen,
um den Polyurethanschaumstoff zu erhalten.

Geeignete Isocyanatzusammensetzungen umfassen Isocyanate mit einer NCO-Funktionalität von ≥ 2. Beispiele solcher Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(isocyanatocyclohexyl)methane) oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Es können als Polyisocyanate z.B. Mischungen der Isomeren des Diphenylmethandiisocyanats ("monomeres MDI", abgekürzt "mMDI"), das heißt 4,4'-Diphenylmethandiisocyanat, 2,4'-Diphenylmethandiisocyanat und 2,2'-Diphenylmethandiisocyanat, und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenylpolymethylenpolyisocyanate, d.h. Gemische der höherkernigen Homologen des Diphenylmethylendiisocyanats, welche eine NCO-Funktionalität > 2 aufweisen und folgende Summenformel aufweisen: C₁₅H₁₀N₂O₂ [C₈H₅NO]ₙ, wobei n = ganze Zahl > 0 ist.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur mit eingesetzt werden.

Statt oder zusätzlich zu den oben genannten Polyisocyanaten können auch geeignete NCO-Prepolymere als Polyisocyanate in der Isocyanatzusammensetzung eingesetzt werden. Die Prepolymere sind herstellbar durch Umsetzung eines oder mehrerer Polyisocyanate mit einem oder mehreren Polyolen, bevorzugt durch Umsetzung eines der genannten Polyisocyanate, besonders bevorzugt durch Umsetzung von MDI oder pMDI mit einem Polyol.

Bevorzugt wird im erfindungsgemäßen Verfahren ein NCO-Prepolymer, erhältlich aus der Umsetzung von MDI mit einem Polyol, eingesetzt. Besonders bevorzugt ist hierbei die Umsetzung von MDI mit einem Kohlenhydrat-gestarteten Polyol, insbesondere mit einem Polyol mit einer Funktionalität von >4,5, bevorzugt mit einem Polyol mit einer Funktionalität von >5,0 oder >5,5, ganz besonders bevorzugt mit einem Sorbitol-gestarteten Polyetherpolyol. Weiterhin bevorzugt weist das mit MDI umgesetzte Polyol eine OH-Zahl von <112 mg KOH/g, besonders bevorzugt <56 mg KOH/g, mehr bevorzugt <40 mg KOH/g, am meisten bevorzugt von 16 - 40 mg KOH/g oder 20 40 mg KOH/g auf. Außerdem weist ein bevorzugtes NCO-Prepolymer einen Gehalt an monomerem MDI, bezogen auf die Gesamtmenge des NCO-Prepolymers, von 40 - 80 Gew.-%, insbesondere 45 - 75 Gew.-, am meisten bevorzugt von 48 - 70 Gew.-% auf.

Die Isocyanatzusammensetzung wird bevorzugt in einer Menge eingesetzt, dass sich eine Kennzahl (auch "Isocyanatkennzahl", "Index" oder "Isocyanatindex") im Bereich von 95 bis 115, besonders bevorzugt 100 bis 110, ganz besonders bevorzugt 103 bis 108 ergibt. Die Kennzahl beschreibt im Sinne dieser Anmeldung das mit 100 multiplizierte Verhältnis aller reaktiven Wasserstoffatome der gegenüber Isocyanaten reaktiven Verbindungen zu der Anzahl der NCO-Gruppen der Isocyanatzusammensetzung. Bei einer Kennzahl von 100 liegt ein äquimolares Verhältnis (1:1) von reaktiven Wasserstoffatomen zu NCO-Gruppen vor. Eine Kennzahl größer 100 beschreibt einen Überschuss an NCO-Gruppen und eine Kennzahl kleiner 100 einen Unterschuss an NCO-Gruppen.

Als Treibmittel können grundsätzlich alle aus dem Stand der Technik zur Herstellung von Polyurethanschaumstoffen bekannten chemischen und physikalischen Treibmittel verwendet werden, insbesondere Wasser. Anstelle von oder neben Wasser können weitere Treibmittel verwendet werden, z.B. flüssiges Kohlendioxid, Kohlenwasserstoffe wie Cyclopentan oder Pentan, partiell fluorierte oder perfluorierte Alkene, partiell chlorierte und fluorierte Alkene, Ameisensäure oder Mischungen daraus. Bevorzugt wird Wasser verwendet, insbesondere bevorzugt in einer Menge, bezogen auf die Gesamtmenge der Polyolzusammensetzung, von 1,0 bis 5,0 Gew.-%, mehr bevorzugt von 1,2 bis 4,0 Gew.-%, noch mehr bevorzugt von 1,5 bis 3,5 Gew.-%, besonders bevorzugt von 2,0 - 3,2 Gew.-%.

Als Katalysatoren kommen grundsätzlich alle aus dem Stand der Technik zur Herstellung von Polyurethanschaumstoffen bekannten Katalysatoren in Frage, insbesondere solche, die geeignet sind, die Reaktion der Isocyanatzusammensetzung mit Wasser und/oder den gegenüber Isocyanaten reaktiven Verbindungen zu beschleunigen. Beispiele solcher Verbindungen sind organische Metallverbindungen sowie Amine.

Beispiele für geeignete, katalytisch aktive Metallverbindungen sind Zinn(II)-Salze von Carbonsäuren mit 2-24 Kohlenstoffatomen wie Zinn(II)-2-ethylhexanoat, Zinn(II)-2-butyloctoat oder Zinn(II)ricinoleat sowie Organozinn(IV)verbindungen wie Dibutylzinn(IV)dilaurat oder Dimethylzinn(IV)neodecanoat.

Es können als aminische Katalysatoren sowohl einbaubare Amine als auch nicht einbaubare Amine verwendet werden. Bei einem einbaubaren Amin handelt es sich um eine Verbindung, die sowohl mindestens eine Aminogruppe als auch mindestens eine gegenüber Isocyanaten reaktive Gruppe aufweist, wobei es sich bei der Aminogruppe um die mindestens eine gegenüber Isocyanaten reaktive Gruppe handeln kann. Bei einem nicht einbaubaren Amin handelt es sich um eine Verbindung, die sowohl mindestens eine Aminogruppe als auch keine gegenüber Isocyanaten reaktive Gruppe aufweist.

Geeignete nicht einbaubare Amine sind zum Beispiel die tertiären Amine Triethylamin, Tributylamin, Dimethylcyclohexylamin, Dimethylbenzylamin, N-Methylimidazol, N-Methyl-,N-ethyl-,N-cyclohexylmorpholin, N,N,N',N'-Tetramethylethylendiamin, N,N,N',N'-Tetramethylbutylendiamin, N,N,N',N'-Tetramethylhexylendiamin-1,6, Pentamethyldiethylentriamin, Tetramethyldiaminoethylether, Bis-(dimethylaminopropy1)-harnstoff, Dimethylpiperazin, 1,2-Dimethylimidazol, 1-Aza-bicyclo-[3,3,0]-octan, 1,4-Diazabicyclo-[2,2,2]-octan. Geeignete einbaubare Amine sind zum Beispiel N(3-Dimethylaminopropyl)-N,N-diisopropanolamin, 6-Dimethylaminohexanol, N-[2-[2-(Dimethylamino)ethoxy]ethyl]-N-methyl-1,3-propandiamin, N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyldipropanolamin, N,N,N'-Trimethyl-N'-hydroxyethylbisaminoethylether, N,N-Dimethylaminopropylharnstoff, N-(2-Hydroxypropyl)-imidazol, N-(2-Hydroxyethyl)-imidazol, N-(2-AminopropyI)-imidazol, 2-((Dimethylamino)ethyl)methylaminopropanol, 1,1'-((3-(Dimethylamino)propyl)imino)bis-2-propanol und/oder Umsetzungsprodukte aus Acetessigsäureethylester, Polyetherpolyolen und 1-(Dimethylamino)-3-aminopropan sowie insbesondere das Tallolsäure-Amidsalz des N,N-Dimethylaminopropylamins.

Weiterhin können in dem erfindungsgemäßen Verfahren neben der erfindungsgemäßen Polyolzusammensetzung als weitere gegenüber Isocyanaten reaktive Komponente auch niedermolekulare gegenüber Isocyanaten reaktive Verbindungen mit Molekulargewichten von weniger als 400 g/mol, insbesondere di- oder trifunktionelle Amine und Alkohole, oder allgemein Polyamine, Polyaminoalkohole oder Polythiole sowie Mischungen aus zwei oder mehr der Vorgenannten verwendet werden, zum Beispiel Diethyltoluoldiamin.

Auch möglich ist die Verwendung von grundsätzlich aus dem Stand der Technik bekannten Hilfs- oder Zusatzstoffen, beispielsweise oberflächenaktiven Substanzen, Stabilisatoren, Füllstoffen, Farbstoffen, Pigmenten, Flammschutzmitteln wie Melamin, Blähgraphit oder Aluminiumhydroxid, Antistatika, Hydrolyseschutzmitteln und/oder fungistatisch und bakteriostatisch wirkenden Substanzen.

Die Erfindung ist außerdem gerichtet auf einen Polyurethanschaumstoff erhältlich nach dem erfindungsgemäßen Verfahren. Ein solcher Polyurethanschaumstoff weist eine geringe Aldehydemission und/oder einen geringen Geruch auf. Bevorzugt weist der erfindungsgemäße Polyurethanschaumstoff also eine Formaldehydemission, bestimmt gemäß VDA275: 1994-07, von <0,75 mg/kg Schaumstoff, bevorzugt <0,70 mg/kg Schaumstoff, besonders bevorzugt <0,65 mg/kg Schaumstoff und/oder eine Acetaldehydemission, bestimmt gemäß VDA275: 1994-07, von <0,15 mg/kg Schaumstoff, bevorzugt <0,10 mg/kg Schaumstoff und/oder eine Note für den Geruch, bestimmt gemäß VDA270; C3, von ≤3,5, bevorzugt ≤3,0 auf. Ganz besonders bevorzugt weist ein erfindungsgemäßer Polyurethanschaumstoff sowohl die in diesem Absatz beschriebenen Acet- und Formaldehydemission als auch den in diesem Absatz beschriebenen Geruch auf.

Ebenfalls ist die Erfindung gerichtet auf eine Verwendung der erfindungsgemäßen Polyolzusammensetzung zur Herstellung eines Polyurethanschaumstoffs mit geringer Aldehydemission und/oder geringem Geruch. Insbesondere kann die erfindungsgemäße Polyolzusammensetzung verwendet werden, um einen Polyurethanschaumstoff herzustellen, der eine Formaldehydemission, bestimmt gemäß VDA275: 1994-07, von <0,75 mg/kg Schaumstoff, bevorzugt <0,70 mg/kg Schaumstoff, besonders bevorzugt <0,65 mg/kg Schaumstoff und/oder eine Acetaldehydemission, bestimmt gemäß VDA275: 1994-07, von <0,15 mg/kg Schaumstoff, bevorzugt <0,10 mg/kg Schaumstoff und/oder eine Note für den Geruch, bestimmt gemäß VDA270; C3, von ≤3,5, bevorzugt ≤3,0 aufweist. Ganz besonders bevorzugt ist die Verwendung der erfindungsgemäßen Polyolzusammensetzung zur Herstellung eines Polyurethanschaumstoffs, der sowohl die in diesem Absatz beschriebenen Acet- und Formaldehydemission als auch den in diesem Absatz beschriebenen Geruch aufweist.

Schließlich ist die Erfindung gerichtet auf eine Polyurethanreaktionsmischung umfassend die erfindungsgemäße Polyolzusammensetzung A und eine Isocyanatzusammensetzung umfassend ein Di- oder Polyisocyanat. Die Polyurethanreaktionsmischung umfasst bevorzugt weiterhin ein Treibmittel, einen Katalysator, gegebenenfalls weitere gegenüber Isocyanaten reaktiven Komponenten und gegebenenfalls Hilfs- und Zusatzstoffe. Besonders bevorzugt besteht die Polyurethanreaktionsmischung aus der erfindungsgemäßen Polyolzusammensetzung A, einer Isocyanatzusammensetzung umfassend ein Di- oder Polyisocyanat, einem Treibmittel, einem Katalysator, gegebenenfalls weiteren gegenüber Isocyanaten reaktiven Komponenten und gegebenenfalls Hilfs- und Zusatzstoffen. Diese einzelnen Bestandteile der Polyurethanreaktionsmischung weisen bevorzugt die oben beschriebenen bevorzugten Eigenschaften und/oder Komponenten auf.

Insbesondere bevorzugt umfasst die erfindungsgemäße Polyurethanreaktionsmischung höchstens 24,0 Gew.-%, bevorzugt höchstens 16,0 Gew.-%, besonders bevorzugt höchstens 8,0 Gew.-%, mehr bevorzugt höchstens 4,0 Gew.-%, am meisten bevorzugt höchstens 2,4 Gew.-%, bezogen auf die Gesamtmenge der Polyolzusammensetzung A, an Polyetherpolyolen mit einer Funktionalität von 2,9 bis 3,9.

Die Erfindung wird auch durch die folgenden Sätze näher beschrieben.
Satz 1: Polyolzusammensetzung A umfassend
   A1. ein Polyetherpolyol mit einer Funktionalität f ≤ 2,8,
   A2. ein Polyetherpolyol mit einer Funktionalität f ≥ 4,0, und
   A3. ein gefülltes Polyol.
Satz 2: Polyolzusammensetzung gemäß Satz 1, wobei das Polyetherpolyol A1 eine OH-Zahl, bestimmt gemäß DIN 53240-2, Stand November 2007, von ≤ 56 mg KOH/g aufweist.
Satz 3: Polyolzusammensetzung gemäß einem der Sätze 1 oder 2, wobei Polyetherpolyol A1 ein zahlengemitteltes Molekulargewicht von ≥ 2000 g/mol aufweist.
Satz 4: Polyolzusammensetzung gemäß einem der Sätze 1 bis 3, wobei im Polyetherpolyol A1 der Anteil an primären OH-Funktionen, bezogen auf die Gesamtzahl an endständigen OH-Funktionen in A1, 70 - 90%, bevorzugt 75 - 85% beträgt.
Satz 5: Polyolzusammensetzung gemäß einem der Sätze 1 bis 4, wobei das Polyetherpolyol A2 eine OH-Zahl, bestimmt gemäß DIN 53240-2, Stand November 2007, von ≤100 mg KOH/g, bevorzugt ≤80 mg KOH/g, mehr bevorzugt ≤60 mg KOH/g, am meisten bevorzugt 15 - 40 mg KOH/g aufweist.
Satz 6: Polyolzusammensetzung gemäß einem der Sätze 1 bis 5, wobei das Polyetherpolyol A2 ein zahlengemitteltes Molekulargewicht von 6000 - 15000 g/mol, bevorzugt 8000 - 13000 g/mol aufweist.
Satz 7: Polyolzusammensetzung gemäß einem der Sätze 1 bis 6, wobei im Polyetherpolyol A2 der Anteil an primären OH-Funktionen, bezogen auf die Gesamtzahl an endständigen OH-Funktionen in A2, 75 - 95%, bevorzugt 80 - 90% beträgt.
Satz 8: Polyolzusammensetzung gemäß einem der Sätze 1 bis 7, wobei das Polyetherpolyol A2 eine OH-Zahl, bestimmt gemäß DIN 53240-2, Stand November 2007, von ≤100 mg KOH/g, bevorzugt ≤80 mg KOH/g, mehr bevorzugt ≤60 mg KOH/g, am meisten bevorzugt 15 - 40 mg KOH/g aufweist.
Satz 9: Polyolzusammensetzung gemäß einem der Sätze 1 bis 8, wobei das gefüllte Polyol A3 ein Polyharnstoffdispersionspolyol mit einem zahlengemittelten Molekulargewicht von 4000 - 8000 g/mol, bevorzugt 5000 - 7000 g/mol, umfasst oder aus diesem besteht.
Satz 10: Polyolzusammensetzung gemäß einem der Sätze 1 bis 9, wobei das gefüllte Polyol A3 ein Polyharnstoffdispersionspolyol mit einer OH-Zahl, bestimmt gemäß DIN 53240-2, Stand November 2007, von 10 - 40 mg KOH/g, bevorzugt 15 - 35 mg KOH/g, mehr bevorzugt 20 - 30 mg KOH/g umfasst oder aus diesem besteht.
Satz 11: Polyolzusammensetzung gemäß einem der Sätze 1 bis 10, wobei der Anteil des Polyetherpolyols A1, bezogen auf die Gesamtmenge der Polyolzusammensetzung A, 60 - 90 Gew.-%, bevorzugt 65 - 85 Gew.-%, mehr bevorzugt 67 - 83 Gew.-%, noch mehr bevorzugt 69 - 81 Gew.-% beträgt.
Satz 12: Polyolzusammensetzung gemäß einem der Sätze 1 bis 11, wobei der Anteil des Polyetherpolyols A2, bezogen auf die Gesamtmenge der Polyolzusammensetzung A, 5,0 - 40,0 Gew.-%, bevorzugt 10,0 - 30,0 Gew.-%, mehr bevorzugt 12 - 28%, noch mehr bevorzugt 14 - 26%, am meisten bevorzugt 16 - 24% beträgt.
Satz 13: Polyolzusammensetzung gemäß einem der Sätze 1 bis 12, wobei der Anteil des gefüllten Polyols A3, bezogen auf die Gesamtmenge der Polyolzusammensetzung A, wenigstens 1,0 Gew.-%, bevorzugt 1,0 - 30 Gew.-%, mehr bevorzugt 1,0 - 20,0 Gew.-%, noch mehr bevorzugt 1,0 - 10 Gew.-%, weiterhin mehr bevorzugt 1,0 - 5,0 Gew.-%, am meisten bevorzugt 1,5 - 3,0 Gew.-% beträgt.
Satz 14: Polyolzusammensetzung gemäß einem der Sätze 1 bis 13 umfassend
   A1.50,0 - 90,0 Gew.-%, bezogen auf die Gesamtmenge der Polyolzusammensetzung A, eines Polyetherpolyols mit einer Funktionalität f ≤ 2,8, einem zahlengemittelten Molekulargewicht von 2000 - 6000 g/mol und einem Anteil an primären OH-Funktionen, bezogen auf die Gesamtzahl an endständigen OH-Funktionen, von 70 - 90%,
   A2.5,0 - 40,0 Gew.-%, bezogen auf die Gesamtmenge der Polyolzusammensetzung A, eines Polyetherpolyols mit einer Funktionalität f ≥ 4,0, einem zahlengemittelten Molekulargewicht von 6000 - 15000 g/mol und einem Anteil an primären OH-Funktionen, bezogen auf die Gesamtzahl an endständigen OH-Funktionen, von 75 - 95%,
   A3. wenigstens 1,0 Gew.-% eines Polyharnstoffdispersionspolyols mit einem zahlengemittelten Molekulargewicht von 3000 - 5000 g/mol, und
   A4.0 - 8,0 Gew.-%, bezogen auf die Gesamtmenge der Polyolzusammensetzung A, eines Polyesterpolyols mit einer Funktionalität 2,0 ≤ f ≤ 4,0 und einem zahlengemittelten Molekulargewicht von 800 - 3000 g/mol.
Satz 15: Polyolzusammensetzung gemäß Satz 14, wobei sie aus den dort genannten Bestandteilen A1, A2, A3 und gegebenenfalls A4 in den dort genannten Mengen besteht.
Satz 16: Polyolzusammensetzung gemäß einem der Sätze 1 bis 15 umfassend
   A1.60,0 - 80,0 Gew.-%, bezogen auf die Gesamtmenge der Polyolzusammensetzung A, eines Polyetherpolyols mit einer Funktionalität 1,8≤f≤2,5, einem zahlengemittelten Molekulargewicht von 2000 - 6000 g/mol und einem Anteil an primären OH-Funktionen, bezogen auf die Gesamtzahl an endständigen OH-Funktionen, von 70 - 90%,
   A2.10,0 - 30,0 Gew.-%, bezogen auf die Gesamtmenge der Polyolzusammensetzung A, eines Polyetherpolyols mit einer Funktionalität 4,0≤f≤8,0, einem zahlengemittelten Molekulargewicht von 8000 - 14000 g/mol und einem Anteil an primären OH-Funktionen, bezogen auf die Gesamtzahl an endständigen OH-Funktionen, von 80 - 90%, und
   A3. 1,0 - 10,0 Gew.-% eines Polyharnstoffdispersionspolyols mit einem zahlengemittelten Molekulargewicht von 3000 - 5000 g/mol,
   A4. 0,1 - 6,0 Gew.-%, bezogen auf die Gesamtmenge der Polyolzusammensetzung A, eines Polyesterpolyols mit einer Funktionalität 2,0≤f≤4,0 und einem zahlengemittelten Molekulargewicht von 1000 - 2500 g/mol.
Satz 17: Polyolzusammensetzung gemäß Satz 16, wobei sie aus den dort genannten Bestandteilen A1, A2, A3 und A4 in den dort genannten Mengen besteht.
Satz 18: Polyolzusammensetzung gemäß einem der Sätze 1 bis 17 umfassend höchstens 24,0 Gew.-%, bevorzugt höchstens 16,0 Gew.-%, besonders bevorzugt höchstens 8,0 Gew.-%, mehr bevorzugt höchstens 4,0 Gew.-%, am meisten bevorzugt höchstens 2,4 Gew.-%, bezogen auf die Gesamtmenge der Polyolzusammensetzung A, Polyetherpolyole mit einer Funktionalität von 2,9 bis 3,9.
Satz 19: Polyolzusammensetzung gemäß einem der Sätze 1 bis 18 umfassend höchstens 8,0 Gew.-%, höchstens 5,0 Gew.-%, höchstens 3,0 Gew.-% oder höchstens 2,0 Gew.-%, jeweils bezogen auf die Gesamtmenge der Polyolzusammensetzung, eines auf Pflanzenöl basierenden Polyols.
Satz 20: Verfahren zur Herstellung eines Polyurethanschaumstoffs umfassend
   Umsetzung
      A. der Polyolzusammensetzung gemäß einem der Sätze 1 bis 19 und
      B. einer Isocyanatzusammensetzung umfassend
         ein Di- oder Polyisocyanat
         in Gegenwart von
      C. einem Treibmittel,
      D. einem Katalysator,
      E. gegebenenfalls weiteren gegenüber Isocyanaten reaktiven Komponenten, und
      F. gegebenenfalls Hilfs- und Zusatzstoffen,
   um den Polyurethanschaumstoff zu erhalten.
Satz 21: Verfahren gemäß Satz 20, wobei die Isocyanatzusammensetzung ein NCO-Prepolymer umfasst oder daraus besteht.
Satz 22: Verfahren gemäß einem der Sätze 20 oder 21, wobei die Komponenten A, B, C, D, gegebenenfalls E und gegebenenfalls F jeweils in einer Menge eingesetzt werden, so dass sich ein Isocyanatindex von 95 bis 115, bevorzugt 100 bis 110, besonders bevorzugt 103 bis 108 ergibt.
Satz 23: Polyurethanschaumstoff erhältlich nach dem Verfahren gemäß einem der Sätze 20 bis 22.
Satz 24: Polyurethanschaumstoff gemäß Satz 23 aufweisend eine Formaldehydemission, bestimmt gemäß VDA 275: 1994-07, von <0,75 mg/kg Schaumstoff, bevorzugt <0,70 mg/kg Schaumstoff, besonders bevorzugt <0,65 mg/kg Schaumstoff.
Satz 25: Polyurethanschaumstoff gemäß einem der Sätze 23 oder 24 aufweisend eine Acetaldehydemission, bestimmt gemäß VDA275: 1994-07, von <0,15 mg/kg Schaumstoff, bevorzugt <0,10 mg/kg Schaumstoff.
Satz 26: Polyurethanschaumstoff gemäß einem der Sätze 23 bis 25 aufweisend eine Note für den Geruch, bestimmt gemäß VDA270; C3, von ≤3,5, bevorzugt ≤3,0.
Satz 27: Verwendung einer Polyolzusammensetzung A gemäß einem der Sätze 1 bis 19 zur Herstellung eines Polyurethanschaumstoffs mit geringer Aldehydemission und/oder geringem Geruch.
Satz 28: Verwendung gemäß Satz 27, wobei geringe Aldehydemission bedeutet, dass die Formaldehydemission, bestimmt gemäß VDA 275: 1994-07, von <0,75 mg/kg Schaumstoff, bevorzugt <0,70 mg/kg Schaumstoff, besonders bevorzugt <0,65 mg/kg Schaumstoff beträgt.
Satz 29: Verwendung gemäß einem der Sätze 27 oder 28, wobei geringe Aldehydemission bedeutet bzw. weiterhin bedeutet, dass die Acetaldehydemission, bestimmt gemäß VDA275: 1994-07, <0,15 mg/kg Schaumstoff, bevorzugt <0,10 mg/kg Schaumstoff beträgt.
Satz 30: Verwendung gemäß einem der Sätze 27 bis 29, wobei geringer Geruch bedeutet, dass eine Note für den Geruch, bestimmt gemäß VDA270; C3, ≤3,5, bevorzugt ≤3,0 beträgt.
Satz 31: Polyurethanreaktionsmischung umfassend die Polyolzusammensetzung A gemäß einem der Sätze 1 bis 19 und eine Isocyanatzusammensetzung umfassend ein Di- oder Polyisocyanat.
Satz 32: Polyurethanreaktionsmischung gemäß Satz 31, weiterhin umfassend ein Treibmittel, einen Katalysator, gegebenenfalls weitere gegenüber Isocyanaten reaktiven Komponenten und gegebenenfalls Hilfs- und Zusatzstoffe.
Satz 33: Polyurethanreaktionsmischung gemäß Satz 30, bestehend aus der Polyolzusammensetzung A gemäß einem der Sätze 1 bis 19, einer Isocyanatzusammensetzung umfassend ein Di- oder Polyisocyanat, einem Treibmittel, einem Katalysator, gegebenenfalls weiteren gegenüber Isocyanaten reaktiven Komponenten und gegebenenfalls Hilfs- und Zusatzstoffen.
Satz 34: Polyurethanreaktionsmischung gemäß einem der Sätze 31 bis 33, wobei die Polyurethanreaktionsmischung höchstens 24,0 Gew.-%, bevorzugt höchstens 16,0 Gew.-%, besonders bevorzugt höchstens 8,0 Gew.-%, mehr bevorzugt höchstens 4,0 Gew.-%, am meisten bevorzugt höchstens 2,4 Gew.-%, bezogen auf die Gesamtmenge der Polyolzusammensetzung A, an Polyetherpolyolen mit einer Funktionalität von 2,9 bis 3,9 umfasst.

Die Erfindung wird weiterhin an Hand der folgenden Beispiele genauer beschrieben, ohne durch sie eingeschränkt zu werden.

### Experimente

### Verwendete Rohstoffe

- Polyol A:: 1,2-Propylenglykol-gestartetes Polyetherpolyol mit einem Molekulargewicht von 4000 g/mol und 80% primären OH-Funktionen, bezogen auf die Gesamtzahl an endständigen OH-Funktionen in Polyol A
- Polyol B:: Glycerin-gestartetes Polyetherpolyol mit einem Molekulargewicht von 4500 g/mol und 87,5% primären OH-Funktionen, bezogen auf die Gesamtzahl an endständigen OH-Funktionen in Polyol B
- Polyol C:: Glyzerin-gestartetes, mit Propylenoxid und Ethylenoxid-Endblock verlängert, mit einem Molekulargewicht von 4800g/mol
- Polyol D:: Sorbitol-gestartetes Polyetherpolyol mit einem Molekulargewicht von 11800 g/mol und 84% primären OH-Funktionen, bezogen auf die Gesamtzahl an endständigen OH-Funktionen in Polyol D
- Polyol E:: Dispersion von 20 Gew.-% Feststoff, hergestellt aus Toluylendiisocyanat und Hydrazinhydrat, in einem Polyetherpolyol mit einem Molekulargewicht von 4800 g/mol, hergestellt durch Umsetzung von Glycerin mit zunächst Propylenoxid und danach Ethylenoxid
- Polyol F:: Polyesterpolyol, hergestellt aus Adipinsäure, Trimethylolpropan, 1,2-Propylenglykol und 1,6-Hexandiol mit einer OH-Zahl von 109 mg KOH/g und einer Funktionalität von 3,23
- Farbstoff:: ISOPUR^{®} Schwarzpaste N, Fa. ISL-Chemie
- Katalysator 1:: N-(3-Dimethylaminopropyl)-N,N-diisopropanolamin (Jeffcat DPA, Huntsman)
- Katalysator 2:: Gemisch aus N-[2-[2-(Dimethylamino)ethoxy]ethyl]-N-methyl-1,3-propandiamin und 6-Dimethylaminohexanol (Dabco NE 1095, Evonik)
- Katalysator 3:: N-[2-[2-(Dimethylamino)ethoxy]ethyl]-N-methyl-1,3-propandiamin (Dabco NE 300, Evonik)
- Additiv:: Umsetzungsprodukt aus Ethylendiamin und 5 Äquivalenten Propylenoxid
- Stabilisator:: Silikonstabilisator (Tegostab B 8734LF2, Evonik)
- Isocyanat:: Polyisocyanat basierend auf Diphenylmethandiisocyanat und einem Sorbitolgestarteten Polyetherpolyol (Polypropylenoxid mit einer OH-Zahl von 29 mg KOH/g und einer Funktionalität von 6) mit einem NCO-Gehalt von 26 Gew.-% und einem monomeren MDI-Gehalt von 55 - 63 Gew.-%, Covestro Deutschland AG.

Es wurden Polyurethanschaumstoffe aus den in Tabelle 1 aufgeführten Komponenten hergestellt, wobei alle dort genannten Mengenangaben zu den Komponenten in Gewichtsteilen angegeben sind.

Zur Herstellung der Schaumstoffe wurden in einem 200 L Fass zunächst alle Bestandteile der Polyurethanreaktionsmischung mit Ausnahme der Isocyanatzusammensetzung mit einem Rührer für ca. 1 h vermischt, so dass 150 kg einer homogenen Polyolformulierung (gegenüber Isocyanaten reaktive Komponente) vorlagen. Danach wurde die Hochdruckanlage mit beiden Komponenten (gegenüber Isocyanaten reaktive Komponente und Isocyanatzusammensetzung) befüllt und die Temperatur jeweils auf 30 °C eingestellt. Anschließend erfolgte die Vermischung beider Komponenten bei 150 bar Komponentendruck über einen Hochdruckmischkopf. Das daraus resultierende Reaktionsgemisch wurde in die offene Form appliziert, und diese wurde verschlossen, wobei die Menge an Reaktionsgemisch so gewählt wurde, dass eine mittlere Dichte des Schaumes von 130 kg/m³ resultierte. Nach ca. 10 Minuten wurden die für die Emssionsprüfung vorgesehenen Formteile (20x20x4 cm³) entformt und die Formteile in Emissionsbeutel verpackt und 24 Stunden bei Raumtemperatur gelagert. Formteile (20x20x4 cm³) für mechanische Prüfungen wurden ebenfalls nach 10 min. entformt und 24 Stunden bei Raumtemperatur gelagert.

An den erhaltenen Schaumstoffen wurden Messungen gemäß den folgenden Normen durchgeführt, deren Ergebnisse ebenfalls in Tabelle 1 aufgeführt sind:
- Rohdichte:: DIN EN ISO 845 (DBL0-Rohdichte)
- Zugfestigkeit:: Zugversuch DIN EN ISO 18798: 04/2008 (DBL0-Zugfestigkeit)
- Reißdehnung:: Zugversuch DIN EN ISO 18798: 04/2008 (DBL0-Reißdehnung)
- Stauchhärte:: Druckversuch DIN EN ISO 3386-1:10/2015 (DBL0-Stauchhärte 40% Kompr.)
- Druckverformungsrest:: DIN EN ISO 1856-2008 (DBL0-DVR 50% Kompr. 22h/70 °C)

- VOC:: VDA 278: 2011-10 (Thermodesorptionsanalyse organischer Emissionen (*volatile organic compounds, VOC))*
- FOG:: VDA 278: 2011-10 (Thermodesorptionsanalyse organischer Emissionen, Anteil kondensierbarer Substanzen (*FOG*)
- Geruch:: VDA 270; C3
- Acetaldehydemission:: VDA 275: 1994-07
- Formaldehydemission:: VDA 275: 1994-07

**Tabelle 1**

| | | Bsp. 1 | Vergl.-Bsp. 1 | Vergl.-Bsp. 2 |
|---|---|---|---|---|
| Polyol A | | 71,7 | | |
| Polyol B | | | 71,8 | |
| Polyol C | | | | 74,16 |
| Polyol D | | 20,0 | 20,0 | |
| Polyol E | | 2,5 | 2,5 | 14,39 |
| Polyol F | | 2,0 | 2,0 | 3,86 |
| Wasser | | 2,6 | 2,6 | 2,5 |
| Farbstoff | | | | 0,46 |
| Katalysator 1 | | 0,7 | 0,6 | |
| Katalysator 2 | | | | 0,3 |
| Katalysator 3 | | 0,3 | 0,3 | 0,68 |
| Diethylentoluoldiamin | | 0,2 | 0,2 | 0,82 |
| Triethanolamin | | | | 1,48 |
| Additiv | | | | 0,96 |
| Stabilisator | | | | 0,39 |
| Summe | | 100 | 100 | 100 |
| Isocyanat | | 60 | 60 | 66 |
| Index | | 105 | 105 | 100 |
| VOC (VDA 278) | mg/kg | 76 | 72 | 72 |
| FOG (VDA 278) | mg/kg | 43 | 67 | 130 |
| Geruch (VDA 270;C3) | Note | 3 | 4 | 4,5 |
| Acetaldehydemission (VDA 275) | mg/kg | <0,10 | 0,18 | 0,4 |
| Formaldehydemission (VDA 275) | mg/kg | 0,62 | 0,84 | 1,3 |
| Rohdichte | kg/m³ | 128 | 130,5 | 114 |
| Zugfestigkeit | kPa | 398 | 358 | 375 |
| Reißdehnung | % | 100 | 79 | 69 |
| Stauchhärte 40% Kompr. | kPa | 39,69 | 48,79 | 46 |
| DVR 50% Kompr. 22h/70°C | % | 6,5 | 5,7 | 6,9 |

Im Unterschied zum erfindungsgemäßen Beispiel (Polyol A) wurden in den Vergleichsbeispielen mit den Polyolen B und C Polyetherpolyole mit einer Funktionalität von 3 eingesetzt. Im Vergleichsbeispiel 2 wurde außerdem eine ungleich größere Menge des PHD-Polyols (Polyol E) eingesetzt. Es wird deutlich, dass lediglich mit der erfindungsgemäßen Polyolzusammensetzung besonders geringe Acetaldehyd- und Formaldehydemissionen gemäß VDA 275: 1994-07 sowie ein geringer Geruch gemäß VDA 270; C3 erzielt werden konnten. Gemäß VDA 278: 2011-10 wurde bei vergleichbarem VOC-Wert außerdem ein deutlich verbesserter FOG-Wert erreicht. Es wird schließlich gezeigt, dass diese Verbesserungen im Emissions- und Geruchsbereich bei vergleichbaren oder sogar verbesserten mechanischen Eigenschaften erzielt wurden.

## Patentansprüche

1. Polyolzusammensetzung A umfassend
A1. ein Polyetherpolyol mit einer Funktionalität f ≤ 2,8,
A2. ein Polyetherpolyol mit einer Funktionalität f ≥ 4,0, und
A3. ein gefülltes Polyol.

2. Polyolzusammensetzung gemäß Anspruch 1, wobei das Polyetherpolyol A1 eine OH-Zahl, bestimmt gemäß DIN 53240-2, Stand November 2007, von ≤56 mg KOH/g und ein zahlengemitteltes Molekulargewicht von ≥2000 g/mol aufweist.

3. Polyolzusammensetzung gemäß einem der Ansprüche 1 oder 2, wobei im Polyetherpolyol A1 der Anteil an primären OH-Funktionen, bezogen auf die Gesamtzahl an endständigen OH-Funktionen in A1, 70 - 90% und/oder im Polyetherpolyol A2 der Anteil an primären OH-Funktionen, bezogen auf die Gesamtzahl an endständigen OH-Funktionen in A2, 75 - 95%, bevorzugt 80 - 90% beträgt.

4. Polyolzusammensetzung gemäß einem der Ansprüche 1 bis 3, wobei das gefüllte Polyol A3 ein Polyharnstoffdispersionspolyol mit einem zahlengemittelten Molekulargewicht von 4000 - 8000 g/mol, bevorzugt 5000 - 7000 g/mol und/oder einer OH-Zahl, bestimmt gemäß DIN 53240-2, Stand November 2007, von 10 - 40 mg KOH/g, bevorzugt 15 - 35 mg KOH/g, mehr bevorzugt 20 - 30 mg KOH/g umfasst oder aus diesem besteht.

5. Polyolzusammensetzung gemäß einem der Ansprüche 1 bis 4, wobei das Polyetherpolyol A2 eine OH-Zahl, bestimmt gemäß DIN 53240-2, Stand November 2007, von ≤ 100 mg KOH/g, bevorzugt ≤ 80 mg KOH/g, mehr bevorzugt ≤ 60 mg KOH/g, am meisten bevorzugt 15 - 40 mg KOH/g aufweist und/oder ein zahlengemitteltes Molekulargewicht von 6000 - 15000 g/mol aufweist.

6. Polyolzusammensetzung gemäß einem der Ansprüche 1 bis 5, wobei der Anteil des Polyetherpolyols A1, bezogen auf die Gesamtmenge der Polyolzusammensetzung A, 60,0 - 90,0 Gew.-%, bevorzugt 65,0 - 85,0 Gew.-%, beträgt, und/oder wobei der Anteil des Polyetherpolyols A2, bezogen auf die Gesamtmenge der Polyolzusammensetzung A, 5,0 - 40,0 Gew.-%, bevorzugt 10,0 - 30,0 Gew.-%, beträgt.

7. Polyolzusammensetzung gemäß einem der Ansprüche 1 bis 6, wobei die Polyolzusammensetzung A höchstens 24,0 Gew.-%, bevorzugt höchstens 16,0 Gew.-%, besonders bevorzugt höchstens 8,0 Gew.-%, mehr bevorzugt höchstens 4,0 Gew.-%, am meisten bevorzugt höchstens 2,4 Gew.-%, bezogen auf die Gesamtmenge der Polyolzusammensetzung A, an Polyetherpolyolen mit einer Funktionalität von 2,9 bis 3,9 umfasst.

8. Polyolzusammensetzung gemäß einem der Ansprüche 1 bis 7, wobei der Anteil des gefüllten Polyols A3, bezogen auf die Gesamtmenge der Polyolzusammensetzung A, wenigstens 1,0 Gew.-%, bevorzugt 1,0 - 30,0 Gew.-%, mehr bevorzugt 1,0 - 20,0 Gew.-%, noch mehr bevorzugt 1,0 - 10,0 Gew.-%, weiterhin mehr bevorzugt 1,0 - 5,0 Gew.-%, am meisten bevorzugt 1,5 - 3,0 Gew.-% beträgt.

9. Polyolzusammensetzung gemäß einem der Ansprüche 1 bis 8 umfassend oder bestehend aus
A1. 50,0 - 90,0 Gew.-%, bezogen auf die Gesamtmenge der Polyolzusammensetzung A, eines Polyetherpolyols mit einer Funktionalität f ≤ 2,8, einem zahlengemittelten Molekulargewicht von 2000 - 6000 g/mol und einem Anteil an primären OH-Funktionen, bezogen auf die Gesamtzahl an endständigen OH-Funktionen, von 70 - 90%,
A2.5,0 - 40,0 Gew.-%, bezogen auf die Gesamtmenge der Polyolzusammensetzung A, eines Polyetherpolyols mit einer Funktionalität f ≥ 4,0, einem zahlengemittelten Molekulargewicht von 6000 - 15000 g/mol und einem Anteil an primären OH-Funktionen, bezogen auf die Gesamtzahl an endständigen OH-Funktionen, von 75 - 95%,
A3. wenigstens 1,0 Gew.-% eines Polyharnstoffdispersionspolyols mit einem zahlengemittelten Molekulargewicht von 3000 - 5000 g/mol, und
A4.0 - 8,0 Gew.-%, bezogen auf die Gesamtmenge der Polyolzusammensetzung A, eines Polyesterpolyols mit einer Funktionalität 2,0≤f≤4,0 und einem zahlengemittelten Molekulargewicht von 800 - 3000 g/mol.

10. Polyolzusammensetzung gemäß einem der Ansprüche 1 bis 9 umfassend oder bestehend aus
A1. 60,0 - 80,0 Gew.-%, bezogen auf die Gesamtmenge der Polyolzusammensetzung A, eines Polyetherpolyols mit einer Funktionalität 1,8≤f≤2,5, einem zahlengemittelten Molekulargewicht von 2000 - 6000 g/mol und einem Anteil an primären OH-Funktionen, bezogen auf die Gesamtzahl an endständigen OH-Funktionen, von 70 - 90%,
A2.10,0 - 30,0 Gew.-%, bezogen auf die Gesamtmenge der Polyolzusammensetzung A, eines Polyetherpolyols mit einer Funktionalität 4,0≤f≤8,0, einem zahlengemittelten Molekulargewicht von 8000 - 14000 g/mol und einem Anteil an primären OH-Funktionen, bezogen auf die Gesamtzahl an endständigen OH-Funktionen, von 80 - 90%, und
A3. 1,0 - 10,0 Gew.-% eines Polyharnstoffdispersionspolyols mit einem zahlengemittelten Molekulargewicht von 3000 - 5000 g/mol,
A4.0,1 - 6,0 Gew.-%, bezogen auf die Gesamtmenge der Polyolzusammensetzung A, eines Polyesterpolyols mit einer Funktionalität 2,0≤f≤4,0 und einem zahlengemittelten Molekulargewicht von 1000 - 2500 g/mol.

11. Verfahren zur Herstellung eines Polyurethanschaumstoffs umfassend
Umsetzung
A. der Polyolzusammensetzung gemäß einem der Ansprüche 1 bis 10 und
B. einer Isocyanatzusammensetzung umfassend
ein Di- oder Polyisocyanat
in Gegenwart von
C. einem Treibmittel,
D. einem Katalysator,
E. gegebenenfalls weiteren gegenüber Isocyanaten reaktiven Komponenten, und
F. gegebenenfalls Hilfs- und Zusatzstoffen,
um den Polyurethanschaumstoff zu erhalten.

12. Polyurethanschaumstoff erhältlich nach dem Verfahren gemäß Anspruch 11.

13. Polyurethanschaumstoff gemäß Anspruch 12, wobei der Polyurethanschaumstoff eine Formaldehydemission, bestimmt gemäß VDA275: 1994-07, von <0,75 mg/kg Schaumstoff, bevorzugt <0,70 mg/kg Schaumstoff, besonders bevorzugt <0,65 mg/kg Schaumstoff aufweist, und/oder eine Acetaldehydemission, bestimmt gemäß VDA275: 1994-07, von <0,15 mg/kg Schaumstoff, bevorzugt <0,10 mg/kg Schaumstoff aufweist und/oder eine Note für den Geruch, bestimmt gemäß VDA270; C3, von ≤3,5, bevorzugt ≤3,0 aufweist.

14. Verwendung einer Polyolzusammensetzung A gemäß einem der Ansprüche 1 bis 10 zur Herstellung eines Polyurethanschaumstoffs mit geringer Aldehydemission und/oder geringem Geruch.

15. Verwendung gemäß Anspruch 14, wobei der Polyurethanschaumstoff eine Formaldehydemission, bestimmt gemäß VDA275: 1994-07, von <0,75 mg/kg Schaumstoff, bevorzugt <0,70 mg/kg Schaumstoff, besonders bevorzugt <0,65 mg/kg Schaumstoff aufweist, und/oder eine Acetaldehydemission, bestimmt gemäß VDA275: 1994-07, von <0,15 mg/kg Schaumstoff, bevorzugt <0,10 mg/kg Schaumstoff aufweist und/oder eine Note für den Geruch, bestimmt gemäß VDA270; C3, von ≤3,5, bevorzugt ≤3,0 aufweist.
